# EUROPEAN PATENT APPLICATION

(11) **EP 2 187 244 A1**
(43) Date of publication of application: **19.05.2010**
(21) Application number: 08792719.0
(22) Date of filing: 26.08.2008
(51) Int. Cl.: G02B 3/00, G02B 1/11

(54) **METHOD FOR MANUFACTURING OPTICAL DEVICE**

(30) Priority: 28.09.2007 JP 2007255593
(71) Applicant: Konica Minolta Opto, Inc., Hachioji-shi, Tokyo 192-8505 (JP)
(72) Inventor: HARA, Akiko, Hachioji-shi Tokyo 192-8505 (JP)
(74) Representative: Henkel, Feiler & Hänzel
(86) International application number: PCT/JP2008/065161
(87) International publication number: WO 2009/041204

(57) **Abstract**

Disclosed is a method for manufacturing an optical device, which enables to suppress deformation during annealing or deformation due to environmental changes over time after annealing. This method for manufacturing an optical device enables to suppress deterioration of a film when the film is formed on the surface of the device. Specifically disclosed is a method for manufacturing an optical device, which is **characterized by** comprising a step for molding an organic-inorganic composite material containing a thermosetting resin and inorganic particles, a step for annealing the molded article of the organic-inorganic composite material, and a step for forming a film over the molded article of the organic-inorganic composite material.

## Description

### FIELD OF TECHENOLOGY

The present invention relates to a process for producing an optical device, specifically by comprising a molded article containing a thermosetting resin.

### TECHNICAL BACKGROUND

Heretofore optical device is used for various optical uses such as glasses, camera, imaging device and optical pickup apparatus. Because of low production cost, optical device is mostly made of resin rather than glass. In the case of forming optical device by molding resin, it is well-known to use thermosetting resin as a constituent material. Especially thermosetting resin is useful in optical device such as imaging device and optical pickup apparatus for which requires an optical precision because a constituent of a thermosetting resin has an advantage to deformation resistivity by heat.

In recent years, films having various functions are often formed on an optical device besides a material development of an optical device itself. For example, in Patent Document 1, disclosed is a technology for forming an optically functional film such as "anti-reflection film" by suppressing reflection light from an optical surface via utilizing light interference in order to use efficiently the laser beam emitted from a light source (namely to increase transmittance) in an optical device for an optical pickup apparatus.

Patent Document 1: Japanese Patent Publication Open to Public Inspection (hereinafter referred to as JP-A) No. 2002-55207

### PROBLEMS TO BE SOLVED BY THE PRESENT INVENTION

When an optical element comprises thermosetting resins, immediately after molding, thermosetting resins at an inside of an optical element may not be fully hardened. In order to fully harden an inside of a molded article, a step of annealing (heating) of the molded article is needed after molding step. Even though annealing of the molded article is carried out, deformation such as shrinkage of a resin may occur due to an environmental change over time during or after annealing.

At the same time, when forming a film on the surface of an optical device, a step of heating may also be required in the view of enhancing adhesion strength between the film and the optical device. In such case, film formation may be carried out either before or after annealing of molded article. If deformation such as shrinkage of a molded article occurs, it results in deterioration of the film by decreasing adhesion strength. As a result, the quality of film deteriorates by minute gap produced between surfaces of molded article and film, film peeled-off from a surface of molded article or cracks raised on film itself.

Therefore, an object of the present invention is to provide a method for producing an optical device having film formed on the surface of the optical device, and to provide a method for producing an optical device by suppressing a deformation according to an environmental change over time during or after annealing and also by suppressing deterioration of film.

### MEANS TO SOLVE THE PROBLEMS

According to the present invention, it has become possible to provide a method for manufacturing an optical device comprising steps of:
molding an organic-inorganic composite material containing a thermosetting resin and inorganic particles,
annealing a molded article of the organic-inorganic composite material, and
forming a film over the molded article.

In the method of producing the optical device, a step of forming the film may be carried out after a step of annealing molded article, or a step of annealing may be carried out after a step of forming the film.

Preferably, the above-mentioned film is an antireflection film and more preferably the above-mentioned antireflection film comprises a plurality of layers having mutually different refractive index.

### EFFECTS OF THE INVENTION

According to the present invention, in a molding step, an organic-inorganic composite material including inorganic particles in addition to thermosetting resin is utilized to a molded article. Existence of inorganic particles results in increasing thermal conductivity and heat in annealing step can easily conduct and can harden to internal of the molded article. As a result, deformation according to an environmental change over time during or after annealing such as shrinkage of a thermosetting resin can be suppressed. Furthermore, deterioration of film can be suppressed because when inorganic particles are included in an organic-inorganic composite material, difference of coefficients of thermal expansion between the molded article and the film becomes smaller than that of a case that inorganic particles are not included in the molded article.

Moreover, according to the present invention, either order of the step of annealing molded article and the step of film forming is acceptable. When the step of film forming is carried out after the step of annealing of molded article, deterioration of film can be suppressed more certain than the case that the step of annealing of molded article followed by the step of film forming, because film forming conditions can be chosen optimally by focusing on film forming condition independently of annealing. On the contrary, when the step of annealing of molded article is carried out after the step of film forming, production process can be shorten because heating process of molded article can be combined with heating of film and heating process of film can be eliminated. In this case, deterioration of film during annealing process cannot occur or is small even if it occurs.

### DESCRIPTION OF THE PREFERRED EMBODIMENT

Hereafter, preferred embodiments of the present the invention is described.

A method for manufacturing an optical device concerning preferred embodiments of the present the invention comprising steps of:
(1) molding an organic-inorganic composite material containing a thermosetting resin and inorganic particles,
(2) annealing a molded article of the organic-inorganic composite material, and
(3) forming a film over the molded article.

Either order of the step of annealing molded article (2) and the step of film forming over the molded article (3) may be acceptable, if the step (2) or (3) is followed by the step (1). The step of annealing of molded article (2) may be carried out after the step of film forming (3) or the step of film forming (3) may be carried out after the step of annealing of molded article (2).

Steps of (1) to (3) will now be specifically described as below.

### <<1: Molding Step of organic-inorganic composite material>>

In a step of molding organic-inorganic composite material, organic-inorganic composite material is prepared and is molded thereof. (1.1) Thermosetting resin and (1.2) Inorganic particles are disclosed first, followed by (1.3) Method for preparing and molding of organic-inorganic composite material.

### [1.1: Thermosetting resin]

Resin which is hardened by heat is usable as thermosetting resin of the present invention and is not limited in its species. Preferably used is silicone based resin, acrylic based resin, allyl ester based resin or epoxy based resin.

### <1.1.1: Silicone based resin>

Silicone based resin is polymer having siloxane bond (-Si-O-) as main chain in which silicon (Si) and oxygen (O) are alterably bonded. Specifically silicone based resin comprising predetermined amount of polyorganosiloxane resin (for example disclosed in JP-A No. 6-9937) is usable as silicone based resin.

Thermosetting polyorganosiloxane resin is not limited to species as long as it can make three-dimensional network structures by continuous hydrolysis-dehydration condensation reaction via heating. Generally it has a property to be hardened by heating at high temperature in long term and once it is hardened, difficult to be softened again.

Such polyorganosiloxane resin has a structure represented by Formula (A) as constituent unit and its shape may be any of chain, ring or network.

Formula (A) ((R₁)(R₂)SiO)ₙ

In Formula (A), R₁ and R₂ each represent a monovalent hydrocarbon group having same or different substituent or unsubstituted groups. Specific example include: alkyl group such as methyl group, ethyl group, propyl group, butyl group; alkenyl group such as vinyl group, allyl group; aryl group such as phenyl group, tryl group; cycloalkyl group such as cyclohexyl group, cyclooctyl group; or group which substitutes hydrogen atom bonded to carbon atom in above group by halogen atom, cyano group or amino group such as chloromethyl group, 3,3,3-triflioropropyl group, cyanomethyl group, γ-aminopropyl group, N-(β-aminoethyl)-γ-aminopropyl group. R₁ and R₂ each may be a group selected from hydroxyl group and alkoxy group. In Formula (A), n represents an integer of 50 or more.

Generally polyorganosiloxane resin is used by solving in hydrocarbon solvents such as toluene, xylene, petronolium solvent or mixture thereof with polar solvent. Further different compositions can be mixed, provided that they can be mutually soluble.

A method for producing polyorganosiloxane resin is not limited and any one of well-known method can be usable. For example, it is available by hydrolysis or alcoholysis of alone or mixture of two or more organosiloxanes. Generally polyorganosiloxane resin contains hydrolysable group such as silanol group or alkoxy group and a content of these groups is 1 - 10 % by mass converted into silanol group.

This reaction is generally carried out under existence of solvent which can solve organosiloxane. Moreover, it can be obtained by a method of synthesizing a block copolymer via co-hydrolysis of linear polyorganosiloxane which contains hydroxyl group, alkoxy group or halogen atom at the chain ends with organotrichlorosilane. Polyorganosiloxane obtained above generally contains residual HCl. In view of high storage stability, amount of HCl is 10 ppm or less, preferably 1 ppm or less in the composition of the present embodiment.

### <1.1.2: Acrylic based resin>

Thermosetting resin having an adamantane skeleton is preferably used as acrylic based resin. Specific example include: 2-alkyl-2-adamantyl (meth)acrylate (JP-A No. 2002-193883), 3,3'-dialkoxycarbonyl-1,1'-biadamantane (JP-A No. 2001-253835), 1,1'-biadamantane compound (US Patent No. 3342880), tetraadamantane (JP-A No. 2006-169177), thermosetting resin having adamantine skelton without having aromatic ring such as 2-alkyl-2-hydroxy adamantine, 2-alkylene adamanatane, 1,3-adamantane dicarbonic acid di-ter-butyl (JP-A No. 2001-322950), bis(hydroxyphenyl) adamantanes or bis(glycigyloxyphenyl)adamantine (JP-A Nos. 11-35522, 10-130371).

### <1.1.3: Allyl ester based resin>

Allyl ester based resin is a thermosetting resin containing allyl ester compound. Specific example of thermosetting resin containing allyl ester compound include: (meth)allyl ester containing bromide and without containing aromatic ring (JP-A No. 2003-66201), allyl(meth)acrylate (JP-A No.5-286896), allyl ester resin (JP-A Nos. 5-286896, 2003-66201), copolymer compound of acryl acid ester and unsaturated compound containing epoxy group (JP-A no. 2003-128725), acrylate compound (JP-A 2003-147072) and acryl ester compound (JP-A No. 2005-2064).

### <1.1.4: Epoxy based resin>

AS epoxy based resin, compound containing at least two or more epoxy groups in one molecule can be usable. Specific example include: bisphenol A type epoxy resin, phenol novolac type epoxy resin, o-crezol novolac type epoxy resin, triphenylmethane type epoxy resin, halogenated epoxy resin such as epoxy resin containing bromide, and epoxy resin containing naphthalene ring. Hydrogenated epoxy resin in which aromatic ring is hydrogenated to cyclohexane ring may be used as aromatic epoxy resin. These epoxy resin can be used alone or in combination of 2 or more.

Further, hardner of epoxy resin include acid anhydride hardner or phenol hardner but is not limited thereto.

Specific example of acid anhydride hardner include: phthalic anhydride, maleic anhydride, trimellitic anhydride, pyromellitic anhydride, hexahydro phthalic anhydride, 3-methyl-hexahydro phthalic anhydride, 4-methyl-hexahydro phthalic anhydride, or mixture of 3-methyl-hexahydro phthalic anhydride and 4-methyl-hexahydro phthalic anhydride, tetrahydro phthalic anhydride, Nadic anhydride and Nadic methylanhydride.

Further, a hardening accelerator can be added as appropriate. Hardening accelerator is not limited, as long as hardenability is good, no coloration occurs and the transparency of thermosetting resins is not adversely affected. Specific example include: imidazoles such as 2-ethyl-4-methylimidazole (trade name: 2E4MZ by Shikoku Chemical Corp.), bicyclic amidines and their derivatives such as tertiary amine, quarterly ammonium salt, diazabicycloundecene, phosphine, and phosphonium salt. This can be used alone or in combination of 2 or more.

### [1.2: Inorganic particles]

As inorganic particles, optical transparent (having light transparency) fine particles are employable, for example fine particles of oxides, sulfides, selenides and tellurides. In concrete, examples of the fine particles include: silicon oxide, aluminum oxide, aluminum phosphate, titanium oxide, zinc oxide, and zinc sulfate, but is not limited thereto. Preferably used are fine particles of silicon oxide (silica) and calcium carbonate.

One kind of inorganic particles may be used or in combination of a plurality of inorganic particles for these fine particles.

Mixing ratio of inorganic particles based on thermosetting resin (volume ratio of inorganic particles in organic-inorganic composite material) is 1 to 50 % by volume, preferably 10 to 40 % by volume, more preferably 20 to 30 % by volume.

Though the shape of the inorganic particle is not specifically limited, a spherical particle can fulfill a function effectively. The distribution of the particles is also not limited but ones having relatively narrow distribution are preferable than ones having relatively wide distribution in view of enhancing the effects of the present invention.

Any known methods can be applied for producing the inorganic particles without any limitation. For example, pyrolysis of metal salt and hydrolysis of metal salt or metal alkoxide is well-known. In a pyrolysis of metal salt, desired inorganic particles can be produced by spraying and pyrolyzing metal salt or solution thereof. In hydrolysis of metal salt or metal alkoxide, desired inorganic particles can be produced by preliminary preparing solution of metal salt or metal alkoxide, following by adding water into the solution and hydrolyzing polymerization.

The average size of the inorganic particles is preferably from 1 nm to 30 nm, more preferably 1 nm to 20 nm, and further preferably from 1 nm to 10 nm. When the average diameter is less than 1 nm, there is the possibility that the desired property cannot be obtained because the particles are difficultly dispersed. When the average diameter exceeds 30 nm, there is the possibility that the light transparency becomes less than 70% by the lowering in the transparency due to the turbid of the organic-inorganic composite material. The average particle diameter is the value in the terms of the diameter of the sphere having the same volume. The average particle diameter is the arithmetic mean of the diameters of 100 or more inorganic particles random sampling from photos by an electron microscope.

The inorganic particles relating to the present invention is preferably subjected to the surface treatment. A method for a surface treatment is not particularly limited and any method known can be usable.

Examples of the surface treatment agent to be used for the surface treatment include tetramethoxy silane, tetraethoxy silane, tetraisopropoxy silane, tetrephenoxy silane, methyltrimethoxy silane, ethyltrimethoxy silane, propyltrimethoxysilane, methyltriethoxy silane, methyltriphenoxy silane, ethyltriethoxy silane, phenyltrimethoxy silane, 3-methylphenyltrimethoxy silane, dimethyldimethoxy silae, diethyldiethoxy silane, diphenyldimethoxy silane, diphenyldiphenoxy silane, trimethylmethoxy silane, triethylethoxy silane, triphenylmethoxy silane, triphenylphenoxy silane, cyclopentyltrimethoxy silane, cyclohexyltriethoxy silane, benzyldimethylethoxy silane, octyltriethoxy silane, vinyltriacetoxy silane, vinyltrichloro silane, vinyltriethoxy silane, γ-chloropropyltrimethoxy silane, γ-chloropropylmethyldichloro silane, γ-chloropropylmethyldimethoxy silane, γ-chloropropylethyldiethoxy silane, γ-aminopropyltriethoxy silane, N-(β-aminoethyl)-γ-aminopropyltrimethoxy silane, N-(β-aminoethyl)-γ-aminopropylmethyldimethoxy silane, γ-mercaptopropyltrimethoxysilane, γ-mercaptopropylmethyldimethoxy silane, γ-glycidoxypropyltrimethoxy silane, γ-glycidoxypropylmethyldimethoxy silane, γ-methacryloxypropyltrimethoxy silane, γ-methacryloxypropylmethyldimethoxy silane, γ-(2-aminoethyl)aminopropyltrimethoxy silane, γ-isocyanatepropyltriethoxy silane, γ-(2-aminoethyl)aminopropylmethyldimethoxy silane, γ-anilinopropyltrimethoxy silane, vinyltrimethoxy silane, N-β-(N-vinylbenzilaminoethyl)-γ-aminopropyltrimethoxy silane·hydrochloride salt, and an amino silane composition. Further, aluminum, titanium, zirconia can be employed in place of silane. In this case, examples thereof include aluminumtriethoxide and aluminumtriisoproxide.

Also usable are fatty acids such as an isostearic acid, a stearic acid, a cyclopropanecarboxylic acid, a cyclohexanecarboxylic acid, a cyclopentanecarboxylic acid, a cyclohexanepropionic acid, an octylic acid, a palmitic acid, a behenic acid, an undecylenic acid, an oleic acid, a hexahydrophthalic acid and so forth, and derivatives thereof, and further, any of organic phosphoric acid based surface treatment agents. These can be used singly, or used by mixing at least two kinds.

These compounds exhibit different characteristics such as a reaction rate and so forth, and those adapted to the conditions of surface treatment can be utilized. These may also be used singly, or in combination of a plurality of kinds. Since the resulting surface-treated particles tend to exhibit different properties depending on the utilized compound, it is also possible to be designed to have affinity with utilized thermosetting resin for organic-inorganic composite material in order to obtain a material composition by selecting the utilized compound during surface treatment. The ratio of surface treatment is not particularly limited, but the surface treatment agent preferably has a content of 10 - 99% by weight, with respect to the weight of particles after surface treatment, and more preferably has a content of 30 - 98% by weight.

### [1.3 Preparation, Manufacturing Method]

In manufacture of the optical device of the present embodiment, the organic-inorganic composite material which turns into optical device is prepared first.

As a manufacturing method of an organic-inorganic composite material, there are mentioned a method in which inorganic particles and a thermosetting resin provided separately are melt kneaded or a method in which inorganic particles are dispersed in a solvent for a thermosetting resin to prepare a dispersion and the solvent is removed from the dispersion.

Among these, a melt-kneading method is preferred as the embodiment of the present invention. A method in which a thermosetting resin is polymerized in the presence of inorganic particles, or a method in which inorganic particles are formed in the presence of the thermosetting resin are applicable, but special condition is necessary in a preparation of polymerization of thermosetting resin or inorganic particles. In the melt-kneading method, organic-inorganic composite material can be manufactured by separately providing a thermosetting resin and inorganic particles by known method and then mixing. Therefore manufacturing cost for manufacturing organic-inorganic composite material can be reduced.

In the melt-kneading method, kneading in the presence of organic solvent is also applicable. When using organic solvent, temperature during melt-kneading can be lowered and result in suppressing deterioration of thermosetting resin during kneading process. In this case, organic solvent is preferably removed from the organic-inorganic composite material by reduced pressure.

As devices usable in melt-kneading, there are mentioned a sealed type kneading device such as Laboplasto Mill, a Brabender, a Banbury mixer, a kneader or a roll; and a batch type kneading device. Also, sequential melt-kneading devices such as a single-axis extruder and a double-axis extruder can be used for manufacture.

Mixing device usable to mixing treated inorganic particles and thermosetting resin include, for example: KRC kneader (produced by KURIMOTO, Ltd.), Poly Labo system (produced by HAAKE), Nanokon mixer (produced by Toyo Seiki Seisaku-sho, Ltd.), Nauter Mixer Bussco Kneader (produced by produced by Buss Corp.), TEM Extruder (produced by Toshiba Machine co. Ltd.), TEX double-axis kneader (produced by The Japan Steel Works, Ltd.), PCM kneader (produced by Ikegai Tekkousho), three-roll mill, mixing roll mill, kneader (produced by INOUE MFG. INC.), Kneadex (produced by Mitsui Mining co.), MS pressured kneader and Nidaruder (produced by Moriyama seisakusho).

In the manufacturing method of the organic-inorganic composite material, the thermosetting resin and the inorganic particles can be mixed at once and kneaded or can be mixed step-by-step in installments and kneaded. In the latter case, in the melt-kneading devices such as the extruders, a component to be mixed step-by-step can be added from a middle of the cylinder.

When an organic-inorganic composite material is manufactured by a melt-kneading method, the inorganic particles can be added in the form of powder or aggregates. Alternatively, they can be added in the form of dispersion dispersed in liquid, and when added in the form of dispersion dispersed in liquid, degassing is preferably carried out after kneading.

When the inorganic particles are added in the form of dispersion dispersed in liquid, it is preferred that they are added after aggregated particles are dispersed into primary particles. For the dispersion, while various dispersion devices can be used, a bead mill is particularly preferred. The bead is made of various kinds of materials and its size is preferably smaller. The bead size is preferably from 0.001 to 1 mm.

Inorganic particles are preferably added in the form of surface treated state. Also integral blend method in which surface treatment agent and inorganic particles are added simultaneously and complexed with thermosetting resin can be usable.

After preparing organic-inorganic composite material by above process, thermosetting rein in the organic-inorganic composite material is hardend by heating and the organic-inorganic composite material can be molded to the predetermined form as an optical device. Thus optical device can be manufactured. Specifically, hardening and molding of the organic-inorganic composite material can be carried out through compression molding, transfer molding or injection molding. Especially, to use thermosetting resin as a molding raw material of molded article is preferred to manufacture an optical device having a spherical or an aspherical surface and precise structure on its optical surface (for example, object lens).

A molded article can be utilized in a various forms such as a spherical form, a bar form, a plate form, a column form, a cylinder form, a tube form, a fiber form, a film or sheet form. Moreover, a molded article is also suitable as various optical parts, because of being excellent in low double refraction, transparency, mechanical strength, heat resistance and low water absorption.

### «2: Annealing step»

In annealing step, a molded article which is obtained by molding step (1) is followed by annealing (heating) in order to harden thoroughly inside of the molded article. Anneal conditions can be suitably set up by a type of molded article (for example, kinds such as thermosetting resin and inorganic particles), the size of a molded article, and a use. For example, intended purpose can be achieved by heating 12 to 50 hours at temperature of 80 - 200 °C.

### <<3: Film forming step>>

In film forming step, a film is formed to the surface of the molded article obtained by the molding step (1). As above-mentioned, the film forming step may be performed to molded article before annealing step or to molded article after an annealing step.

A film (kind of film) which can be formed at a film forming step is not particularly limited, and various functional films such as an anti-reflection film, an enhanced reflection film, a half mirror film, a dichroic coating, a polarizing film, an infrared blocking film, a heat blocking film, a conductive film, a hard coat (a surface protective film) are mentioned. Among them, an anti-reflection film is particularly suitable.

An anti-reflection film can make surface reflection of optical device small via light interference.

### Roles of anti-reflection film are listed below:

### (i) Increase of light transmission intensity

Reflectance of a surface of optical device depends on a refractive index. Reflectance becomes 4 % in the case of a glass material having a low refractive index such as BK-7 (optical glass and refractive-index (d line): 1.5168) and reflectance also becomes 8% by a glass material having a high refractive index. Although based also on types of films, at an optical surface having film, reflectance becomes 0.1 to 1%. In the case of a zoom lens which has much number of lenses, the transmission through the lens will be remarkably influenced by existence of film. Reflectance is reduced by forming an anti-reflection film over an optical device so that the amount of light which transmits the optical device increases.

### (ii) Reduction of flare and ghost

Flare or ghost of the present invention is a light other than an image focusing light (light which forms a subject's image) which transmits through an optical system and reaches to an image focusing plane. It becomes the cause of reducing the contrast of a subject image due to forming a blurred image inaccurate in addition to a subject. These flare and ghost can be decreased by forming an anti-reflection film on an optical device.

### (iii) Adjustment of colored balances

In a color photography, the reproducibility of a color (colored balances) becomes important evaluation factor. In particular, in silver halide photography employing a color film, spectral transmittances of an optical device has significant influences on the photo color reproduction. The spectral transmittance of an optical device can be changed in some degree by choosing applied coating. Therefore colored balance can be adjustable by forming an anti-reflection film on an optical device.

### (iv) Surface protection of a lens

Especially in the case of a glass lens, when the lens being polished is left for a long time at the moist place, whitish haze will be produced on the surface of a lens. This is called 'burned' and it becomes a cause of decreasing a light intensity of a lens. An anti-reflection film is an effective means for preventing this 'burned'. 'Burned' will not be generated if a film coating is performed on the lens being washed finely after polishing. Since the hardness of the film by coating is quite larger than glass, it is effective in protecting an optical device from damage. In addition, an anti-reflection film is effective in enhancing mechanical, physical and chemical stability of an optical device, such as decreasing the influence of electricity and change of outside environment on the optical element.

In order to form an anti-reflection film, a low refractive index material, a middle refractive index material and a high refractive index material can be used as appropriate.

As a low refractive index material, silicone oxide, magnesium fluoride, aluminum fluoride, the mixture of silicon oxide and an aluminum oxide or mixture thereof are employed preferably.

As a middle refractive index material, lanthanum fluoride, neodymium fluoride, cerium fluoride, aluminum fluoride, lanthanum aluminate, lead fluoride, aluminum oxide, or mixture of thereof is employed. Among them, to use aluminum oxide, lanthanum aluminate or mixture thereof is preferably used.

As a high refractive index material, scandium oxide, lanthanum oxide, titanate praseodymium, lanthanum titanate, titanium oxide, lanthanum aluminate, yttrium oxide, hafnium oxide, zirconium dioxide or mixture thereof is employed. Among them, to use scandium oxide, lanthanum oxide, lanthanum aluminate, yttrium oxide, hafnium oxide, zirconium dioxide or mixture thereof is preferably used. Particularly as for high refractive index material, it is preferable that titanium metal atom is not included.

Preferred example of layer configuration for an anti-reflection film is listed. In the following, 'n1, n2, ...' each represent a refractive index at a wavelength of 405nm to the first layer (layer which touches directly on the surface of a molded article), the second layer, and so on, respectively. 'd1, d2, ...' represent film thickness of the first layer, the second layer, and so on, respectively.
<1-layer structure: molded article / low refractive index material>
   1st layer: 1.2 ≤ n1 ≤ 1.55, 60 nm ≤ d1 ≤ 80 nm
<2-layer structure: molded article / middle or high refractive index material / low refractive index material>
   First layer: 1.55 ≤ n1, 15 nm ≤ d1 ≤ 91 nm
   Second layer: 1.2 ≤ n2 < 1.55, 30 nm ≤ n2 ≤ 118 nm
<3-layer structure Type 1: molded article / low refractive index matexial / high refractive index material / low refractive index material>
   First layer: 1.2 ≤ n1 <1.55, 10 nm ≤ d1 ≤ 15000 nm
   Second layer: 1.7 ≤ n2, 20 nm ≤ d2 ≤ 110 nm
   Third layer: 1.2 ≤ n3 < 1.55, 35 nm ≤ d3 ≤ 90 nm
<3-layer structure Type 2: molded article / middle refractive index material / high refractive index material / low index material>
   First layer: 1.55 ≤ n1 < 1.7, 40 nm ≤ d1 ≤ 15000 nm
   Second layer: 1.7 ≤ n2, 35 nm ≤ d2 ≤ 90 nm
   Third layer: 1.2 ≤ n3 <1.55, 45 nm, d3 ≤ 85 nm
<5-layer structure: low or middle refractive index material / high refractive index material / low refractive index material / high refractive index material / low refractive index material>
   First layer: 1.2 ≤ n1 ≤ 1.7, 5 nm ≤ d1 ≤ 15000 nm
   Second layer: 1.7 ≤ n2, 15 nm ≤ d2 ≤ 35 nm
   Third layer: 1.2 ≤ n3 < 1.55, 25 nm ≤ d3 ≤ 45 nm
   Fourth layer: 1.7 ≤ n4, 50 nm ≤ d4 ≤ 130 nm
   Fifth layer: 1.2 ≤ n5 < 1.55, 80 nm ≤ d5 ≤ 110 nm
<7-layer structure: molded article / low or middle refractive index material / high refractive index material / low refractive index material / high refractive index material / low refractive index material / high refractive index material / low refractive index material>
   First layer: 1.2 ≤ n1 < 1.7, 80 nm ≤ d1 ≤ 15000 nm
   Second layer: 1.7 ≤ n2, 10 nm ≤ d2 ≤ 25 nm
   Third layer: 1.2 ≤ n3 < 1.55, 30 nm ≤ d3 ≤ 45 nm
   Fourth layer: 1.7 ≤ n4, 40 nm ≤ d4 ≤ 60nm
   Fifth layer: 1.2 ≤ n5 < 1.55, 10 nm ≤ d5 ≤ 20nm
   Sixth layer: 1.7 ≤ n6, 6 nm ≤ d6 ≤ 70 nm
   Seventh layer: 1.2 ≤ n7 < 1.55, 60 nm ≤ d7 ≤ 100 nm

An anti-reflection film is not limited to above layer structures, but may have 4-layer structures, 6-layer structures, or 8 or more layer structures.

As film forming method of various films including an anti-reflection film, well-known methods such as vacuum evaporation method, sputtering method, CVD method (chemical vapor deposition method), sol-gel method, atmospheric pressure plasma method, coating method, and mist method, can be used. For example, in the case of forming an anti-reflection film by vacuum evaporation method in oxygen atmospheres by introducing oxygen gas into chamber or in vacuum state, the method of forming (laminating) films on molded article by heating and vapor-depositing high refractive-index material, medium refractive index material, and low refractive index material is applicable. This method can be used to the usual sputtering method.

As above-mentioned, after forming a film on the surface of the molded article of an organic-inorganic composite material, the molded article on which the film was formed is heated, in order to strengthen the film. Heating conditions can be suitably set up by the type (kinds such as thermosetting resin and inorganic particles) of molded article, the size of a molded article, the use, a film type, film thickness. For example, intended purpose can be achieved by heating 12 to 50 hours at temperature of 60 - 150 °C.

According to above embodiment, in a molding step, by adding inorganic particles to thermosetting resins and forming an organic-inorganic composite material, the thermal conductivity of the molding composition improves by existence of inorganic particles, and in the annealing step, heat is easily conducted to internals of molded article, and can fully harden to internals of molded article. Therefore, deformation such as shrinkage of thermosetting resin accompanying the annealing process and the environmental changes over time after annealing can be suppressed.

Furthermore, by including inorganic particles in an organic-inorganic composite material, since the difference of coefficient of thermal expansion between molded article and film becomes smaller than that of in case inorganic particles are not included in a molding compound, deterioration of film can be suppressed. Thus, deterioration of film quality such as minute gap produced between surface of molded article and film, a film peeled off from surface of molded article, or cracks arisen on film itself, can be suppressed.

Moreover, either order of the step of annealing molded article and the step of film forming is acceptable. When the step of film forming is carried out after the step of annealing of molded article, deterioration of film can be suppressed more certain than the case that the step of annealing of molded article followed by the step of film forming, because film forming conditions can be chosen optimally by focusing on film forming condition independently of annealing.

On the contrary, when the step of annealing of molded article is carried out after the step of film forming, production process can be shorten because heating process of molded article can be combined with heating of film and heating process of film can be eliminated. In this case, deterioration of film during annealing process cannot occur or is small even if it occurs (Refer to Examples bellow).

An optical device according to embodiment is prepared by performing each steps of (1) - (3), and is applied to the following optical device, for example.

For example, an optical lens and an optical prism include image pick lenses of a camera; lenses of such as a microscope, an endoscope and a telescope; an all-optical transmitting lens such as eyeglass lens; a pickup lens for an optical disc such as CD, CD-ROM, WORM (write once, read many optical disc), MO (rewritable optical disc; magnetooptical disc), MD (mini-disc) and DVD (digital video disc); and a lens in a laser scanning system such as an fθ lens for a laser beam printer and a lens for a sensor; and a prism lens in a finder system of a camera.

An optical disc application includes such as CD, CD-ROM, WORM (write once, read many optical disc), MO (rewritable optical disc; magnetooptical disc), MD (mini-disc) and DVD (digital video disc). Other optical applications include a light guide of such as a liquid crystal display; optical film such as polarizer film, retardation film and light scattering film; a light diffusion plate; an optical card; and a liquid crystal display element substrate.

Among these, an optical resin lens according to this invention is suitable as a pickup lens and a laser scanning system lens, which require low double refraction, and is most preferably utilized as a pickup lens.

### EXAMPLES

### <<Preparation of organic-inorganic composite material>>

Examples 1 - 8 and comparative examples 1 - 8 were prepared as organic-inorganic composite materials by melt-kneading of inorganic particles below to thermosetting resins according to the combination of Table 3. The mixing ratio of the inorganic particles to thermosetting resin (volume ratio of the inorganic particles to an organic-inorganic composite material) is 25 % by volume, and the PolyLab system (produced by HAAKE) was used in the melt-kneading. In the above-mentioned organic-inorganic composite material in comparative examples 1 - 8, material is constituted only from thermosetting resins, and inorganic particles do not be included.

### (Thermosetting resins)

Silicone: LPS-L402 produced by the Shin-Etsu Chemical Co. Ltd.
Methacrylate: 2-alkyl-2-adamantyl(metha)acrylate prepared according to method disclosed in JP-A No. 2002-193883 by a Daicel Chemical Industries, Ltd.

### (Inorganic particles)

Silica: RX300, mean particle diameter 7nm produced by Nippon Aerosil Co. Ltd

Alumina: TM300 (γ alumina), mean particle diameter 7nm produced by Taimei Chemical Co. Ltd.

### <<Preparation of sample (test piece)>>

Each organic-inorganic composite material is pressed at 160 °C and 13.3 Pa under reduced pressure to form molded article of 11 φmm and 3 mm thickness and followed by polishing surface to produce test pieces. A plurality of test piece was prepared according to the combination of thermosetting resin and inorganic particles (refer to Examples 1 - 8 and comparative examples 1 - 8 in Table 3).

### <<Forming of anti-reflection film>>

Samples of Examples 2, 4, 6 and 8 and comparative examples 2, 4, 6 and 8 were prepared by forming anti-reflection films via vapor deposition method on one side of each test piece respectively under the conditions shown in Tables 1 and 2. Test pieces of Examples 2, 4 and 6 and Comparative examples 2, 4 and 6 were prepared by forming anti-reflection films of 1-layer structure under the conditions shown in Table 1, and Example 8 and Comparative example 8 were prepared by forming anti-reflection films of 5-layers structure under the conditions shown in Table 2 (the first layer is corresponding to film formed directly on the test piece). The film thickness of the anti-reflection film was measured by observing cross section of the film by an electron microscopy. Then, annealing each samples of Examples 2, 4, 6 and 8 and the comparative examples 2, 4, 6 and 8 were carried out as same as above, and degree of shrinkage during annealing and wiping resistance were evaluated.

**Table 1**

| Film forming condition | Anti-reflection film (Examples 1 - 6 Comparative examples 1 - 6) |
|---|---|
| Evaporated material | Silicon oxide |
| Layer material | Silicon oxide |
| Introduced gas | Oxygen gas |
| Refractive index | 1.43 - 1.49 |
| Thickness (nm) | 60 |

**Table 2**

| Film forming condition | Anti-reflection film (Examples 7 - 8, Comparative examples 7 - 8 ) | | | | |
|---|---|---|---|---|---|
| | 1st layer | 2nd layer | 3rd layer | 4th layer | 5th layer |
| Evaporated material | Aluminum oxide | Zirconium oxide | Silicon oxide | Zirconium oxide | Silicon oxide |
| Layer material | Aluminum oxide | Zirconium oxide | Silicon oxide | Zirconium oxide | Silicon oxide |
| Introduced gas | Oxygen | Oxygen | Oxygen | Oxygen | Oxygen gas |
| Refractive index | 1.62 | 1.93 | 1.46 | 1.93 | 1.46 |
| Thickness (nm) | 60 | 15.1 | 29.5 | 123 | 82.7 |

### <<Evaluation of properties at annealing>>

Samples of Examples 1, 3, 5 and 7 and comparative examples 1, 3, 5 and 7 were annealed (heating 24 hours at 100 °C). Then degree of shrinkage at annealing and wiping resistance was evaluated.

### (Evaluation of Degree of shrinkage)

About each sample, volume was calculated by measuring thickness and width before and after annealing step by micrometer, and then degree of shrinkage was calculated. Degree of shrinkage was evaluated based on the following criteria. The results of each sample were shown in Table 3.
A: Degree of shrinkage was ± 0.5 % or less.
B: Degree of shrinkage was between ± 0.5 % and ± 2 %.
C: Degree of shrinkage was between ± 2 % and ± 7 %.
D: Degree of shrinkage was ± 7 % or more.

### (Evaluation of Wiping Resistance)

The surface of the anti-reflection film of each sample was wiped many times with the cotton swab containing isopropyl alcohol with 5 to 10 g load. Each wiping 10 times, the surface of the anti-reflection film of each sample was observed under the microscope, and the existence of peel of an anti-reflection film was observed. Total number of wiping at which peeling of the anti-reflection film occur was calculated and wiping resistance of the each sample was evaluated based on the following criteria. The results of each sample were shown in Table 3.
A: No peel was noted by wiping 100 times.
B: After wiping 30 times, no peel was noted. But after wiping 100 times, peel was noted.
C: Peel was noted after wiping 30 times.

In above evaluation of degree of shrinkage and wiping resistance, evaluation for each sample of Examples 1, 3, 5 and 7 and Comparative examples 1, 3, 5 and 7 were carried out without forming the anti-reflection film.

### (Evaluation of Environment resistance)

The anti-reflection films was formed on each samples corresponding to Examples 1, 3, 5, and 7 and Comparative Examples 1, 3, 5, and 7 after annealing by the same manner as above. The anti-reflection film of 1-layer structure was formed on the test pieces of Examples 1, 3 and 5 and Comparative Examples 1, 3 and 5 under the conditions shown in Table 1. The anti-reflection film of 5-layer structure was formed on the test pieces of Example 7 and Comparative Example 7 under the conditions shown in Table 2. Then, the anti-reflection films formed on the test pieces of Examples 1, 3, 5 and 7 and Comparative Examples 1, 3, 5 and 7 were heated for 24 hours at 70 °C.

As for the whole of each sample of Examples 1 - 8 and Comparative Examples 1 - 8, annealing is performed and the anti-reflection films is also formed at this time. The following environmental test was performed for each samples corresponding to Examples 1 - 8 and Comparative Examples 1 - 8, and volume change and surface appearances were evaluated.

### <Measurement of Volume change>

Each sample were left in the environmental test condition (in high temperature of 90 °C for 168 hours, and then in high temperature of 60 °C and high humidity of 90 % for 168 hours). Volume of each sample was calculated by measuring thickness and width by micrometer before and after environmental test, and then volume change was calculated. Volume change was evaluated based on the following criteria. The results of each sample were shown in Table 3.
A: Volume change was ± 0.5 % or less.
B: Volume change was between ± 0.5 % and ± 2 %.
C: Volume change was between ± 2 % and ± 7 %.
D: Volume change was ± 7 % or more.

### <Evaluation of Surface appearance>

Each sample was left in the heat test condition (in high temperatures of 85 °C and 90 °C for 168 hours), and then surface appearances of the anti-reflection film was observed by microscope at room temperature. Further other than heat test, each sample was left in high temperature - high humidity condition (in high temperature of 60 °C and high humidity of 90 % for 168 hours), and surface appearances of the anti-reflection film was observed by microscope as the same manner as above. Surface appearances of the anti-reflection film after heat test and high temperature - high humidity test was observed and was evaluated based on the following criteria. The results of each sample were shown in Table 3.
A: No cracks or no peel were noted after all of heat test (85 °C), heat test (90 °C), and high temperature - high humidity test.
B: No cracks or no peel were noted after both of heat test (85 °C) and high temperature - high humidity test, but cracks or peel were noted after heat test condition (90 °C).
C: Cracks or peel were noted after either heat test (85 °C) or high temperature - high humidity test.
D: Cracks or peel were noted after both heat test (85 °C) and high temperature - high humidity test.

**Table 3**

| Sample | Thermosetting resin | Inorganic particles | *1 | Order of steps | Annealing condition | | Evaluation of Degradation at annealing step | | Evaluation of Environment resistance | |
|---|---|---|---|---|---|---|---|---|---|---|
| | | | | | Temperature | Time | Shrinkage | Wiping resistance | Volume change | Surface apperance |
| Ex. 1 | | Silica | 1 | Annealing→ | | | A | - | A | A |
| Comp. 1 | | - | | Film forming | | | D | | C | D |
| Ex. 2 | | Silica | | Film forking→ | | | A | A | A | B |
| Comp. 2 | Silicone | - | | Annealing | | | D | C | C | D |
| Ex. 3 | | Alumina | | Annealing→ | | | A | - | A | A |
| Comp. 3 | | - | | Film forming | | | D | | C | D |
| Ex. 4 | | Alumina | | Film forming→ | | | A | A | A | B |
| Comp. 4 | | - | | Annealing | 100 °C | 24 hours | D | C | C | D |
| Ex. 5 | | Silica | | Annealing→ | | | A | - | A | A |
| Comp. 5 | Methacrylate | - | | Film forming | | | C | | B | C |
| Ex. 6 | | Silica | | Film forming→ | | | A | A | A | A |
| Comp. 6 | | - | | Annealing | | | C | B | C | C |
| Ex. 7 | | Silica | 5 | Annealing→ | | | A | - | A | A |
| Comp. 7 | Silicone | - | | Film forming | | | D | | C | D |
| Ex. 8 | | Silica | | Film forming→ | | | A | A | A | A |
| Comp. 8 | | - | | Annealing | | | D | C | C | D |

| | | | | | | | | | | |
|---|---|---|---|---|---|---|---|---|---|---|
| *1: Antireflection film (Nos. of layers), * Ex.: Example, Comp.: Comparative example | | | | | | | | | | |

As shown in Table 3, by comparing samples having same number in samples of Examples 1 - 8 and Comparison examples 1 - 8 (for example, Example 1 and Comparison example 1), samples of Examples 1 - 8 including inorganic particles are superior to samples of Comparison examples 1 - 8 in the evaluation of deterioration at annealing and environmental resistance. Thus it is found that regardless of the order of annealing process and film forming process, internals of molded article is fully hardened and deterioration of anti-reflection films is also suppressed. Thereby, to include inorganic particles in molded article results in suppressing deformation of the molded article accompanying annealing process and environmental changes after annealing process, and also being usable in suppressing deterioration of film when film is formed over molded article.

Moreover, by comparing samples having same number in samples of Examples 2, 4 and 6 and Comparison examples 2, 4 and 6 (for example, Example 2 and Comparison example 2), samples of Examples 2, 4 and 6 including inorganic particles are superior to samples of Comparison examples 2, 4 and 6, in the evaluation of wiping resistance in the deterioration evaluation at annealing. Thus it is found that the anti-reflection film does not deteriorate even if processing annealing. Furthermore, by comparing samples of Example 2 and Comparison example 8, the sample of Example 8 having many layers of anti-reflection film is superior to the sample of Example 2 in the evaluation of environment resistance at surface appearance. Thus in the case of forming film over molded article, it is found to be advantage to form film by a plurality of layer structure rather than to form film of single layer structure.

## Claims

1. A method for manufacturing an optical device comprising steps of:
molding an organic-inorganic composite material containing a thermosetting resin and inorganic particles,
annealing a molded article of the organic-inorganic composite material, and
forming a film over the molded article.

2. The method for manufacturing the optical device of claim 1, the step of annealing the molded article is followed by the step of forming the film over the molded article.

3. The method for manufacturing the optical device of claim 1, the step of forming the film over the molded article is followed by the step of annealing the molded article.

4. The method for manufacturing the optical device of any one of claims 1 to 3, wherein the film is an anti-reflection film.

5. The method for manufacturing the optical device of claim 4, wherein the anti-reflection film comprises a plurality of layers each having different refractive index.
